# EUROPEAN PATENT SPECIFICATION

(11) **EP 1 491 363 B1**
(45) Date of publication and mention of the grant of the patent: **05.05.2010**
(21) Application number: 03715549.6
(22) Date of filing: 27.03.2003
(51) Int. Cl.: B60C 5/14, B60C 1/00, C08L 21/00, C08K 5/098

(54) **PNEUMATIC TIRE FOR HEAVY LOAD**
LUFTREIFEN FÜR SCHWERE LASTEN
PNEUMATIQUE POUR LOURDES CHARGES

(30) Priority: 01.04.2002 JP 2002098155
(43) Date of publication of application: 29.12.2004
(73) Proprietor: Bridgestone Corporation, Tokyo 104-8340 (JP)
(72) Inventor: EZAWA, Naoshi BRIDGESTONE CORPORATION Tech. Centre, Kodaira-shi, Tokyo 187-8531 (JP)
(74) Representative: Whalley, Kevin
(86) International application number: PCT/JP2003/003883
(87) International publication number: WO 2003/082608

(56) References cited:
- EP-A- 0 763 563
- JP-A- 3 148 304
- JP-A- 3 148 304
- JP-A- 9 272 308
- JP-A- 9 272 308
- JP-A- 10 297 209
- JP-A- 10 297 209
- JP-A- 61 060 302
- JP-A- 61 060 302
- JP-A- 63 184 502
- JP-A- 2001 260 609
- JP-A- 2001 260 609
- JP-B2- 2 614 441
- US-A- 4 549 593
- US-A- 4 549 593
- US-A- 5 178 702
- US-A- 6 136 123
- US-A- 6 148 889

## Description

This invention relates to a heavy duty pneumatic tire, and more particularly to a heavy duty pneumatic tire considerably improving a durability in use at warm and humid areas.

In the conventional heavy duty pneumatic tire, an innerliner layer made from a butyl based rubber composition having a low air permeability is arranged as an innermost layer for maintaining an air pressure of the tire, and also an inner face protection layer is arranged between the innerliner layer and a carcass layer. The term "carcass layer" used herein means a carcass rubber portion of a carcass ply comprised of ply cords and a carcass rubber covering these ply cords.

The inner face protection layer is required to have a function of trapping oxygen so as not to allow oxygen to pass through the innerliner layer at the carcass ply to deteriorate an adhesion force between the ply cord and the carcass rubber, and a function of reinforcing the carcass rubber so as not to allow the carcass rubber to creep outward in a radial direction due to the running of the tire or the internal tire pressure to cause the ply cords to stand out toward the inner face of the tire. Also, the inner face protection layer is required to have a composition near to that of the carcass rubber so as not to deteriorate the function inherent to the carcass ply due to the change of the carcass rubber composition before and after the vulcanization, and further a higher adhesion force to the innerliner layer made from the butyl based rubber composition before and after the vulcanization.

The oxygen trapping function is attained by deteriorating the rubber of the inner face protection layer itself through oxidation. However, as the fracture resistance of the inner face protection layer lowers due to the deterioration through oxidation, if a large force is applied to the tire by riding over a projection in the last stage of the tire running or the like, the inner face protection layer is broken to bring about problems such as a puncture and the like. Therefore, rubber having a high fracture resistance even in the deterioration through oxidation is desirable as a rubber for the inner face protection layer. Also, a rubber having a high elasticity and a high creep resistance is desirable as the rubber for the inner face protection layer in order to reinforce the carcass ply to suppress the occurrence of the creeping due to the tire running or the internal tire pressure.

In the pneumatic tire disclosed in Japanese Patent No. 2614441, the innerliner layer arranged inside the carcass layer has a three-layer structure of inner layer-middle layer-outer layer in which p-phenylene diamine based antioxidant is compounded in the middle layer at an amount of 5-30 parts by weight based on 100 parts by weight of a rubber component in order to provide a resistance to oxidation deterioration.

In JP-A-2001-121906 is disclosed a technique that an elastic reinforcing layer is arranged between the carcass ply and the innerliner layer and a copolymer consisting of one or more monomers containing a conjugated diene and one or more aromatic vinyl monomers is used in this reinforcing layer.

In JP-A-9-272308 and JP-A-10-297209 is disclosed a technique that the inner face protection layer is rendered into a two-layer structure and a cobalt compound of an organic acid is substantially removed from a rubber composition constituting a layer located adjacent the innerliner layer to improve the resistance to oxidation deterioration of the inner face protection layer.

However, Japanese Patent No. 2614441 has a problem that p-phenylene diamine based antioxidant compounded in the middle layer is migrated during the vulcanization to adversely affect the adhesion between the ply cord and the carcass rubber.

In JP-A-2001-121906, there is a problem that the compounding cost of the elastic reinforcing layer becomes higher because of using the copolymer consisting of one or more monomers containing a conjugated diene and one or more aromatic vinyl monomers.

Even if the cobalt compound of the organic acid is substantially removed from the layer located adjacent the innerliner layer as disclosed in JP-A-9-272308 and JP-A-10-297209, the effect of improving the resistance to oxidation deterioration in the inner face protection layer is not sufficient, and particularly there remains a problem that the inner face protection layer may be broken in high-temperature and humid areas.

Attention is also drawn to the disclosures of US-4549593A; JP-03-148304A; JP-2001-260609A; JP-61-060302A; US-5178702A; US-6136123A; EP-0763563A; and US-6148889A.

It is, therefore, an object of the invention to provide a heavy duty pneumatic tire in which the inner face protection layer arranged between the carcass layer and the innerliner layer controls the creeping of the carcass rubber and also the resistance to oxidation deterioration is sufficiently high to prevent the occurrence of the breakage of the inner face protection layer even when being used in high-temperature and humid areas.

The inventor has made various studies in order to achieve the above object and found that it the inner face protection layer arranged between the innerliner layer and the carcass layer in the heavy duty pneumatic tire is rendered into a two-layer structure of a rubber layer adjacent to the innerliner layer and a rubber layer adjacent to the carcass layer, and the compounding of the rubber composition is changed between both the rubber layers to separate the functions of both the rubber layers so that the rubber layer adjacent to the carcass layer has a high creep resistance and a compounding near to that of the carcass layer so as to suppress the influence due to the difference of the compounding composition to the carcass layer, and the rubber layer adjacent to the innerliner layer has a high fracture resistance even after the deterioration through oxidation, then the creeping of the carcass rubber can be suppressed and the resistance to oxidation deterioration can be further improved while maintaining the adhesion property between the ply cord and the carcass rubber, and as a result the invention has been accomplished.

Namely, the invention provides a heavy duty pneumatic tire comprising a carcass layer, an innerliner layer and an inner face protection layer arranged therebetween, **characterized in that** the inner face protection layer is comprised of a rubber layer A adjacent to the innerliner layer and a rubber layer B adjacent to the carcass layer, and each of rubber layers constituting the innerliner layer, the carcass layer, the rubber layer A and the rubber layer B is compounded with a rubber component, sulfur and a cobalt compound of an organic acid, and an amount of sulfur compounded satisfies the following equations (I) and (II):

S_{A} < S_{B} ≤ S_{C} (I)

2 ≤ S_{A} ≤ 4 (II)

(wherein S_{A}, S_{B} and S_{C} are an amount of sulfur compounded in a rubber composition constituting the rubber layer A, rubber layer B and the carcass layer, respectively, based on 100 parts by mass of the rubber component). S_{B} is preferably not less than 4.

An elongation at break of the rubber composition constituting the rubber layer A is preferably 1.00-1.45 times an elongation at break of the rubber composition constituting the rubber layer B.

The invention will be described in detail below.

The heavy duty pneumatic tire according to the invention comprises a pair of bead portions, a pair of side portions, a tread portion, a carcass ply toroidally extending between the bead portions, an innerliner layer, and an inner face protection layer arranged between a carcass layer constituting the carcass ply and the innerliner layer, in which the inner face protection layer is comprised of a rubber layer A adjacent to the innerliner layer and a rubber layer B adjacent to the carcass layer. Also, each of rubber compositions constituting the innerliner layer, carcass layer, rubber layer A and rubber layer B, respectively, is compounded with a rubber component, sulfur and a cobalt compound of an organic acid.

The rubber layer B plays a role that the rubber layer A and the carcass layer are separated from each other at a certain distance so that a bad influence due to the compounding difference between the rubber composition constituting the rubber layer A and the rubber composition constituting the carcass layer does not exert upon the carcass layer, and a role of reinforcing the carcass ply to suppress the creeping of the carcass rubber so as not to cause ply cords to stand out toward an inner face of the tire.

On the other hand, it is sufficient that the rubber layer A has a creep resistance lower than that of the rubber layer B because the creeping of the carcass rubber is suppressed by the rubber layer B, so that the compounding of the rubber composition constituting the rubber layer A improves the fracture resistance after the deterioration through oxidation and hence the amounts of sulfur and cobalt compound of organic acid compounded can be made lower than those of the rubber layer B, and also the amount of a vulcanization accelerator compounded can be reduced. In case of improving the fracture resistance, an elongation at break of the rubber composition constituting the rubber layer A is preferably 1.00-1.45 times, more preferably 1.02-1.45 times an elongation at break of the rubber composition constituting the rubber layer B. Moreover, oxygen passing through the innerliner layer is trapped with the rubber layer A, so that it hardly arrives at the carcass ply through the rubber layer B.

The rubber layer B according to the invention is made of a rubber composition equal or similar to the rubber composition constituting the carcass layer. In such a rubber composition, natural rubber or a rubber blend containing not less than 70% by mass of natural rubber is used as a rubber component. As the other rubber in the case of a rubber blend are mentioned a synthetic polyisoprene rubber, a polybutadiene rubber, a styrene-butadiene copolymer rubber and so on. Also, the cobalt compound of the organic acid to be compounded in the above rubber composition is usually compounded in the carcass rubber for the carcass ply reinforcing the ply cord (e.g. steel cord) as an adhesion promoter, and includes, for example, cobalt naphthenate, cobalt stearate, cobalt oleate, cobalt tallolate, cobalt resinate and the like. The compounding amount of the cobalt compound of the organic acid in the rubber composition is usually 0.1-2.0 parts by mass based on 100 parts by mass of the rubber component. Furthermore, the rubber composition usually contains 4-7 parts by mass of sulfur based on 100 parts by mass of the rubber component as a vulcanizing agent.

In the rubber composition constituting the rubber layer B and the carcass layer are properly compounded carbon black, a vulcanization accelerator, an antioxidant, a softening agent and the like in addition to the aforementioned rubber component, sulfur and the cobalt compound of the organic acid. As the carbon black are used FEF, HAF or ISAF grade, and a compounding amount thereof is usually 40-65 parts by mass based on 100 parts by mass of the rubber component.

The rubber composition constituting the rubber layer A according to the invention has substantially the same composition as in the rubber layer B, but the compounding amount of sulfur is decreased so as to satisfy a relationship for the compounding amount of sulfur as mentioned later in order to attain the separated functions of the rubber layer A and the rubber layer B and improve the fracture resistance after the deterioration through oxidation.

That is, the compounding amount of sulfur in the rubber composition constituting the rubber layer A satisfies the following equations (I) and (II) with respect to the compounding amount of sulfur in each rubber composition constituting the carcass layer and the rubber layer B from a viewpoint that the fracture resistance is improved after the deterioration through oxidation.

S_{A} < S_{B} ≤ S_{C} (I)

2 ≤ S_{A} ≤ 4 (II)

In the above formulae, S_{A}, S_{B}, S_{C} are an amount of sulfur compounded in a rubber composition constituting the rubber layer A, rubber layer B and the carcass layer, respectively, based on 100 parts by mass of the rubber component.

The inner face protection layer according to the invention is comprised of the rubber layer A and the rubber layer B having the aforementioned rubber composition to separate the functions of these layers from each other and sufficiently improve the resistance to oxidation deterioration in the rubber layer A, whereby there can be provided a heavy duty pneumatic tire considerably improving the durability in use at warm and humid areas.

In order that the inner face protection layer according to the invention sufficiently develops the above effect, it is preferable that the rubber layer A has a thickness of 0.2-2 mm, and the thickness of the rubber layer B has a thickness of 0.2-2 mm. Also, it is preferable that a total thickness of the rubber layer A and the rubber layer B is within a range of 0.5-3.0 mm.

The following examples are given in illustration of the invention and are not intended as limitations thereof.

Tires to be tested in Examples 1 and 2 and Comparative Examples 1 and 2 are tires for truck and bus having a tire size of 11R22.5 and a rib pattern, in which rubber layer A and rubber layer B and carcass layer are prepared according to a compounding recipe shown in Table 1. Moreover, the rubber layer A has a thickness of 0.3 mm and the rubber layer B has a thickness of 0.3 mm.

After each test tire is run on a drum over 100,000 km, the tire is cut to measure elongation at break of rubber in the rubber layers A and B, a sinking amount of ply cord and adhesion property to the ply cord by the following measuring methods to thereby obtain results shown in Tables 1 and 2.
(1) Elongation at break of rubber (according to JIS K6251-1993)
   A JIS #3 sample is taken out from portions of the rubber layer A and B, respectively, and then an elongation at break thereof is measured by means of an Instron tension testing machine.
(2) Sinking amount of ply cord
   After only the innerliner layer is taken out from the tire after the running, an irregular state of the inner face protection layer is evaluated by an average value of a sinking amount (difference in vertical length between mountain portion and valley portion in the irregularity).
(3) Adhesion property to ply cord

An adhesion force between ply cord and carcass rubber is evaluated by an adhesion ratio of the carcass rubber to the ply cord after an innermost ply is taken out from a shoulder portion of the tire.

The evaluation results of the tests of the above (1) to (3) are shown in Tables 1 and 2 by an index on the basis that Comparative Example 1 is 100. Moreover, the larger the index value in any test results, the better the property.

**Table 1**

| | | Carcass layer | Rubber layer B | Rubber layer A | | | |
|---|---|---|---|---|---|---|---|
| Natural rubber | | 100 | 100 | 100 | 100 | 100 | 100 |
| N326 (carbon black) | | 50 | 50 | 50 | 50 | 50 | 50 |
| Cobalt compound of organic acid | | 1.5 | 1.5 | 0 | 0 | 0 | 0 |
| Zinc white | | 8 | 6 | 6 | 6 | 6 | 6 |
| Antioxidant | | 1 | 1.5 | 1.5 | 1.5 | 1.5 | 1.5 |
| Vulcanization accelerator | | 0.8 | 0.8 | 0.6 | 0.6 | 0.6 | 0.6 |
| Sulfur | | 5 | 5 | 4.5 | 3.5 | 2.5 | 1.5 |
| Elongation at break of rubber | (%) | - | 400 | 392 | 440 | 500 | 600 |
| | (index) | | 100 | 98 | 110 | 125 | 150 |

**Table 2**

| | Comparative Example 1 | Example 1 | Example 2 | Comparative Example 2 |
|---|---|---|---|---|
| Sinking amount of ply cord | 100 | 98 | 97 | 90 |
| Adhesion property to ply cord | 100 | 100 | 100 | 90 |

In the tires of Examples 1 and 2, the sinking amount of ply cord is equal to that of Comparative Example 1, and also the adhesion property of carcass rubber to ply cord is equal to that of Comparative Example 1, while the elongation at break of rubber is largely improved and the fracture resistance is improved. On the other hand, in the tire of Comparative Example 2, the elongation at break of rubber is considerably improved to improve the fracture resistance, but since the modulus of elasticity is too low, the sinking amount of ply cord is deteriorated to a considerable extent, and further the adhesion property of carcass rubber to ply cord lowers.

According to the invention, the durability of a heavy duty pneumatic tire can be considerably improved by improving the elongation at break of rubber in the rubber layer A adjacent to the innerliner layer participating to the resistance to oxidation deterioration in the inner face protection layer arranged between the innerliner layer and the carcass layer in the heavy duty pneumatic tire without deteriorating the adhesion property between ply cord and carcass rubber and the sinking amount of ply cord.

## Claims

1. A heavy duty pneumatic tire comprising a carcass layer, an innerliner layer and an inner face protection layer arranged therebetween, **characterized in that** the inner face protection layer is comprised of a rubber layer A adjacent to the innerliner layer and a rubber layer B adjacent to the carcass layer, and each of rubber layers constituting the innerliner layer, the carcass layer, the rubber layer A and the rubber layer B is compounded with a rubber component, sulfur and a cobalt compound of an organic acid, and an amount of sulfur compounded satisfies the following equations (I) and (II):
S_{A} < S_{B} ≤ S_{C} (I)
2 ≤ S_{A} ≤ 4 (II)
(wherein S_{A}, S_{B} and S_{C} are an amount of sulfur compounded in a rubber composition constituting the rubber layer A, rubber layer B and the carcass layer, respectively, based on 100 parts by mass of the rubber component), and the rubber component in each of the rubber layer A, rubber layer B and carcass layer is natural rubber or a rubber blend containing not less than 70% by mass of natural rubber.

2. A heavy duty pneumatic tire according to claim 1, wherein S_{B} is not less than 4.

3. A heavy duty pneumatic tire according to claim 1 or claim 2, wherein an elongation at break of the rubber composition constituting the rubber layer A is 1.00-1.45 times an elongation at break of the rubber composition constituting the rubber layer B.

## Patentansprüche

1. Luftreifen für Lastkraftwagen, umfassend eine Karkassenschicht, eine Innenisolierungsschicht und eine dazwischen angebrachte Innenflächenschutzschicht, **dadurch gekennzeichnet, dass** die Innenflächenschutzschicht aus einer an die Innenisolierungsschicht angrenzende Gummischicht A und einer an die Karkassenschicht angrenzende Gummischicht B besteht, wobei jede der Gummischichten, die die Innenisolierungsschicht, die Karkassenschicht, die Gummischicht A und die Gummischicht B bilden, mit einem Gummibestandteil, Schwefel und einer Kobaltverbindung einer organischen Säure gemischt ist, und eine Menge von Schwefel im Gemisch den folgenden Gleichungen (I) und (II) entspricht:
S_{A}<S_{B}≤S_{C} (I)
2<S_{A}≤4 (II)
(wobei S_{A}, S_{B} und S_{C} eine Menge von Schwefel in einer Gummizusammensetzung ist, die jeweils die Gummischicht A, die Gummischicht B und die Karkassenschicht, basierend auf 100 Massenteilen des Gummibestandteils), und der Gummibestandteil in jeder der Gummischicht A, der Gummischicht B und der Karkassenschicht natürliches Gummi oder eine Gummimischung ist, die nicht weniger als 70 Massen-% des natürlichen Gummis enthält.

2. Luftreifen für Lastkraftwagen nach Anspruch 1, wobei S_{B} nicht weniger als 4 beträgt.

3. Luftreifen für Lastkraftwagen nach Anspruch 1 oder Anspruch 2, wobei eine Bruchdehnung der die Gummischicht A bildenden Gummizusammensetzung 1,00 bis 1,45 mal einer Bruchdehnung der die Gummischicht B bildenden Gummizusammensetzung entspricht.

## Revendications

1. Pneu poids lourd, comprenant une couche de carcasse, une couche de calandrage intérieur et une couche de protection de face interne disposée entre celles-ci, **caractérisé en ce que** la couche de protection de surface interne est composée d'une couche de caoutchouc A adjacente à la couche de calandrage intérieur et une couche de caoutchouc B adjacente à la couche de carcasse, et chacune des couches de caoutchouc constituant la couche de calandrage intérieur, la couche de carcasse la couche de caoutchouc A et la couche de caoutchouc B est mélangé à un composant de caoutchouc, du soufre et un composé de cobalt d'un acide organique, et une quantité de soufre dans le mélange satisfait les équations (I) et (II) suivantes:
S_{A}<S_{B}≤S_{C} (I)
2<S_{A}≤4 (II)
(où S_{A}, S_{B} et S_{C} sont une quantité de soufre dans une composition de caoutchouc constituant la couche de caoutchouc A, la couche de caoutchouc B, et la couche de carcasse, respectivement, sur la base de 100 parties en masse du composant de caoutchouc), et le composant de caoutchouc dans chacune des couche de caoutchouc A, couche de caoutchouc B et couche de carcasse est un caoutchouc naturel ou un mélange de caoutchouc contenant pas moins de 70% en masse de caoutchouc naturel.

2. Pneu poids lourd selon la revendication 1, dans lequel S_{B} est au moins 4.

3. Pneu poids lourd selon la revendication 1 ou la revendication 2, dans lequel un allongement rupture de la composition de caoutchouc constituant la couche de caoutchouc A est 1,00-1,45 fois un allongement à la rupture de la composition de caoutchouc constituant la couche de caoutchouc B.
